# EUROPÄISCHE PATENTANMELDUNG

(11) **EP 1 182 083 A2**
(43) Veröffentlichungstag der Anmeldung: **27.02.2002**
(21) Anmeldenummer: 01119588.0
(22) Anmeldetag: 16.08.2001
(51) Int. Cl.: B60Q 1/14

(54) **Verfahren zum Betreiben von mindestens zwei elektrischen Verbrauchern**

(30) Priorität: 25.08.2000 DE 10041880
(71) Anmelder: Hella KG Hueck & Co., 59552 Lippstadt (DE)
(72) Erfinder: Diezmann, Jürgen, 33154 Salzkotten (DE); Fortkort, Karl-Heinz, 59239 Wadersloh (DE); Delille, Christian, 59556 Lippstadt (DE)

(57) **Zusammenfassung**

Es wird ein Verfahren zum Betreiben von mindestens zwei elektrischen Verbrauchern (V1,V2) beschrieben, die während einer gemeinsamen Zeitdauer betrieben werden, wobei die Bestromung der Verbraucher (V1,V2) während des Betriebs getaktet erfolgt.

Die Verbraucher (V1,V2) werden jeweils über einen eigenen elektrisch betätigbaren Schalter (S1,S2) während des Betriebs taktweise ein- und ausgeschaltet, wobei zur Reduzierung von elektromagnetischen Störgrößen mindestens zwei Schalter (S1,S2) jeweils zeitversetzt im Abstand einer Schaltzeit-Differenz (Δt) eingeschaltet werden und/oder mindestens zwei Schalter (S1,S2) jeweils zeitversetzt im Abstand einer Schaltzeit-Differenz (Δt) ausgeschaltet werden.

## Beschreibung

Die Erfindung bezieht sich auf ein Verfahren zum Betreiben von mindestens zwei elektrischen Verbrauchern, die während einer gemeinsamen Zeitdauer betrieben werden, wobei die Bestromung der Verbraucher während des Betriebs getaktet erfolgt.

Die Anforderung, zwei oder mehrere Verbraucher gleichzeitig zu betreiben, gibt es zum Beispiel im Bereich der Kraftfahrzeugbeleuchtung, wo zum Betrieb von Abblendlicht, Standlicht etc. jeweils ein Lampenpaar (links und rechts) mit Strom versorgt werden muß.

Oftmals erfolgt die Bestromung dieser Verbraucher während des Betriebs getaktet, d.h. die Stromversorgung der Verbraucher erfolgt nicht über einen dauerhaft eingeschalteten Strom, der zu Beginn des Betriebs einmal eingeschaltet wird und dann erst bei Betriebsende wieder ausgeschaltet wird. Bei der taktweisen Bestromung der Verbraucher wird der Strom vielmehr gemäß einer Rechteckimpulsfolge dauernd ein-und ausgeschaltet. Die getaktete Bestromung eines Verbrauchers hat den Vorteil, daß der effektive Wert der Spannung am Verbraucher ausgehend von einer zur Verfügung stehenden Versorgungsspannung in einfacher Weise zum Beispiel über eine Pulsweitenmodulation auf für den Verbraucher optimale Werte eingestellt und geregelt werden kann. Zum Beispiel kann so in einem Kraftfahrzeug mit einer höheren Bordnetzspannung eine 12V Lampe mit einer reduzierten Effektivspannung zuverlässig betrieben werden. Darüber hinaus kann mit den Einstell- und Regelmöglichkeiten der getakteten Bestromung der Betrieb des Verbrauchers mit schädlichen Überspannungen, die beispielsweise im Bordnetz eines Kraftfahrzeuges auftreten können, vermieden werden, wodurch z.B. die Lebensdauer von Lampen verlängert wird. Auch können über die Taktung von Lampen und die damit erzielte reduzierte Lichtleistung unterschiedliche Funktionen mit einer Lampe dargestellt werden - z.B. die Bremslichtfunktion durch eine konstante und die Schlusslichtfunktion durch eine getaktete Ansteuerung.

Aufgrund der vorgenannten Vorteile kommt die getaktete Bestromung von Verbrauchern im Bereich der Kraftfahrzeugbeleuchtung und -elektronik immer mehr zur Anwendung.

Bei der getakteten Bestromung tritt jedoch das Problem der Erzeugung von Störimpulsen und der Aussendung von elektromagnetischen Störgrößen, das grundsätzlich bei jedem schnell erfolgenden Ein- und Ausschaltvorgang vorhanden ist, besonders stark zutage, da hier der Strom dauernd wechselweise ein- und ausgeschaltet wird. Die Größe der Störimpulse und die Verteilung der Störwellen im Frequenzspektrum hängt dabei unter anderem ab von der Art der eingesetzten Schalter (z.B. Halbleiterschalter, Treiber, Relais etc.), von der Größe des Stroms, der geschaltet wird, sowie von der Flankensteilheit. So können beispielsweise Störspektren im Frequenzbereich von Lang-, Mittel- und Kurzwelle auftreten, die dann z.B. vom Verstärker einer Rundfunkempfangsantenne eines Kraftfahrzeugs mitverstärkt werden und den Rundfunkempfang beträchtlich stören würden.

Der Betrieb von elektrischen Verbrauchern mit einer getakteten Bestromung ist daher unter dem Geschichtspunkt der elektromagnetischen Verträglichkeit problematisch, insbesondere dann, wenn zwei oder mehrere Verbraucher gleichzeitig getaktet betrieben werden, da dann mehrere Störquellen vorhanden sind.

Ein bekannte Möglichkeit zur Begrenzung der Störsignale besteht darin, neben den Schaltern elektronische Zusatzbauteile einzusetzen, die die Anstiegsflanken der getakteten Schaltsignale flacher (länger) machen sollen. Problematisch hierbei ist jedoch, daß dadurch auch die Verlustleistung in den elektrisch betätigbaren Schaltern steigt. Durch den Anstieg der Verlustleistung, bei der ebenfalls kritische Werte nicht überschritten werden dürfen, stößt man mit dieser Methode der Störsignalbegrenzung schnell auf Grenzen. Darüber hinaus sind solche Zusatzbauteile unter Kostengesichtspunkten sowie aus baulichen und fertigungstechnischen Gründen nicht erwünscht bzw. auf ein Minimum zu beschränken.

Eine weitere bekannte Möglichkeit, die Aussendung von Störwellen zu begrenzen, besteht in der Vorsehung einer Abschirmung. Eine solche Abschirmung verursacht jedoch ebenfalls zusätzliche Kosten und ist aus konstruktiven Gründen oftmals nicht möglich.

Aufgabe der Erfindung ist es daher, ein Verfahren für den getakteten Betrieb von zwei oder mehreren Verbrauchern zu schaffen, die gleichzeitig betrieben werden, wobei mit diesem Verfahren in einfacher und kostengünstiger Weise eine Begrenzung der Störsignale erreicht werden soll.

Diese Aufgabe wird erfindungsgemäß dadurch gelöst, daß die Verbraucher jeweils über einen eigenen elektrisch betätigbaren Schalter während des Betriebs taktweise ein- und ausgeschaltet werden, wobei mindestens zwei Schalter jeweils zeitversetzt im Abstand einer Schaltzeit-Differenz (Δt) eingeschaltet werden und/oder mindestens zwei Schalter jeweils zeitversetzt im Abstand einer Schaltzeit-Differenz (Δt) ausgeschaltet werden.

Durch das zeitversetzte Ein- und/oder Ausschalten der Verbraucher wird in vorteilhafter Weise erreicht, daß die Störsignale, die beim Schalten der einzelnen Verbraucher auftreten sich nicht zeitgleich überlagern. Damit wird sicher vermieden, daß das Gesamtstörsignal, das von den Verbrauchern erzeugt wird, zu keiner Zeit über einer kritischen Schwelle liegt. Die Überlagerung der Störsignale beim Ein- und/oder Ausschalten der einzelnen Verbraucher, die zu einer kritischen Größe des Gesamtstörsignals führen würde, wird somit in einfacher und kostengünstiger Weise bei reduziertem Einsatz von Zusatzbauelementen und ohne Abschirmung verhindert. Die Wirkung wird erzielt durch die verfahrensgemäße Steuerung der Ein- und/oder Ausschaltreihenfolge durch Einführung der Schaltzeit-Differenz. Dabei ist die Schaltzeit-Differenz so gewählt ist, das der Schalter von mindestens einem Verbraucher erst dann ein- oder ausgeschaltet wird, wenn mindestens ein anderer Verbraucher einen stabilen (störungsfreien) Schaltzustand erreicht hat.

Die Umsetzung dieses Verfahrens erfolgt vorzugsweise über ein Software-Programm, das von einem Mikrokontroller in einer Steuereinheit zur Ansteuerung der Verbraucher abgearbeitet wird.

Weitere vorteilhafte Ausführungsformen ergeben sich aus den Unteransprüchen.

Anhand der beigefügten Zeichnungen soll die Erfindung nachfolgend näher erläutert werden.

Es zeigt:
- Figur 1: ein Blockschaltbild einer 1. Schaltungsvariante für den getakteten Betrieb von zwei Verbrauchern, die gemäß des erfindungsgemäßen Verfahrens angesteuert werden,
- Figur 2: ein Blockschaltbild einer 2. Schaltungsvariante für den getakteten Betrieb von zwei Verbrauchern, die gemäß des erfindungsgemäßen Verfahrens angesteuert werden,
- Figur 3: ein Blockschaltbild der Schaltungsvariante von Figur 1, jedoch mit einer zusätzlichen Meßeinheit,
- Figur 4: eine Oszillogrammaufzeichnung für die Ein- und Ausschaltsignale von zwei getaktet betriebenen Verbrauchern nach dem Stand der Technik sowie das korrespondierende Gesamtstörsignal,
- Figur 5: eine Oszillogrammaufzeichnung für die Ein- und Ausschaltsignale von zwei getaktet betriebenen Verbrauchern gemäß des erfindungsgemäßen Verfahrens sowie das korrespondierende Gesamtstörsignal.

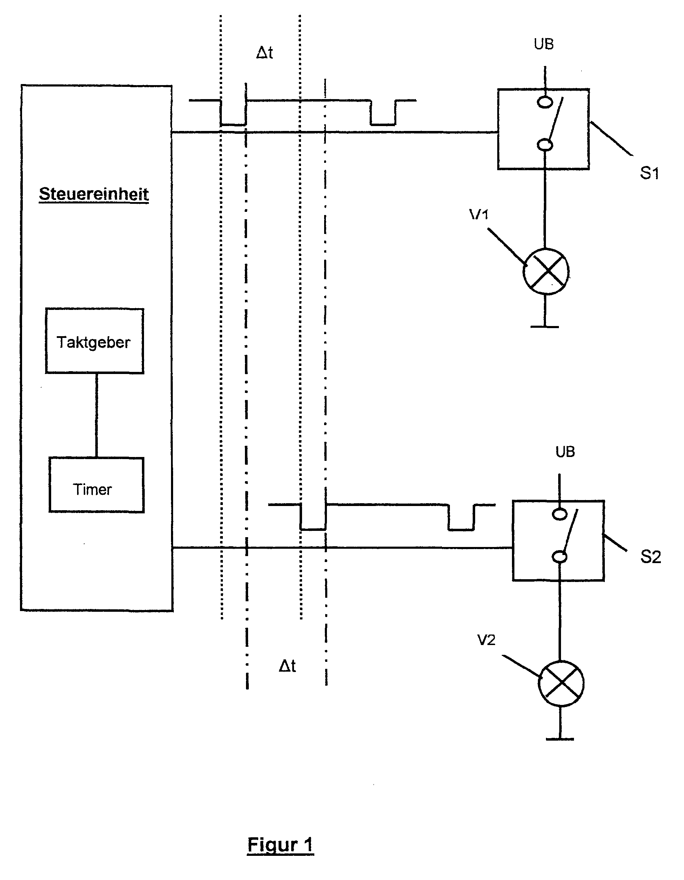

In Figur 1 ist eine 1. Schaltungsvariante zur Durchführung des erfindungsgemäßen Verfahrens für den getakteten Betrieb von 2 Glühlampen als Verbraucher (V1, V2) dargestellt. Die getaktete Bestromung erfolgt über jeweils einen elektrisch betätigbaren Schalter (S1,S2), z.B. ein Halbleiterschalter, die die Verbraucher im eingeschalteten Zustand jeweils mit der Versorgungsspannung (UB) verbinden. Dabei werden von einer Steuereinheit (z.B. ein Mikrokontroller) für jeden Schalter getaktete Ein- und Ausschaltsignale erzeugt, mit denen die Schalter (S1, S2) beaufschlagt werden. Je nach verwendetem Schaltertyp erfolgt dabei das Einschaltern durch eine fallende Flanke und das Ausschalten durch eine steigende Flanke oder umgekehrt. Zur Bewirkung der Schaltzeit-Differenz (Δt) sind die beiden getakteten Schaltsignale gegeneinander phasenverschoben. Die Phasenverschiebung bzw. die Schaltzeit-Differenz wird in dieser Schaltungsvariante mittels eines Timers aus den Taktsignalen eines Taktgebers in der Steuereinheit erzeugt. Zur Bewirkung der Phasenverschiebung bzw. der Schaltzeit-Differenz können auch zwei verschiedene Taktgeber verwendet werden. Taktgeber und Timer können als integraler Bestandteil der Steuereinheit oder als mit ihr verbundene externe Bausteine ausgebildet sein.

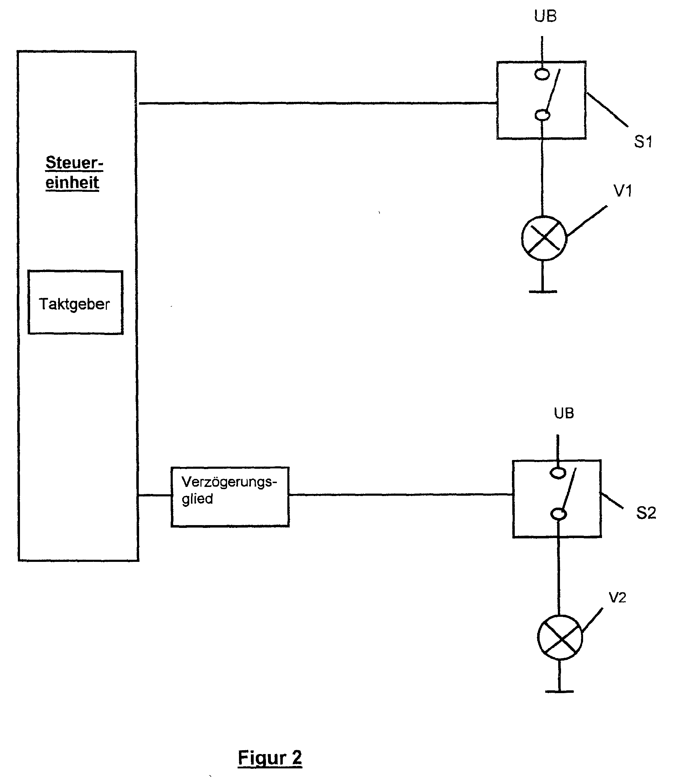

In Figur 2 ist eine 2. Schaltungsvariante zur Durchführung des erfindungsgemäßen Verfahrens gezeigt. In diesem Fall erzeugt die Steuereinheit an sich über einen Taktgeber für die beiden Schalter (S1, S2) zwei synchrone, nicht phasenverschobene getaktete Ein- und Ausschaltsignale. Die Schaltzeit-Differenz (Δt) wird in diesem Fall durch ein Verzögerungsglied in der Schaltsignalleitung von der Steuereinheit zum 2. Schalter (S2) erzeugt. Als Verzögerungsglied kommt z.B. ein analoges RC-Glied oder ein digitaler Timer-Baustein in Frage.

Um die an den Verbrauchern (V1,V2) anliegende effektive Betriebsspannung einzustellen und zu regeln, wird zusätzlich die Pulsweite der taktweise ein- und ausgeschalteten Verbraucher moduliert. Dabei ist es erfindungsgemäß im Zusammenhang mit der Pulsweitenmodulation optional vorgesehen, die Schaltzeit-Differenz (Δt) in Abhängigkeit von der Pulsweite ebenfalls zu verändern, um auch hier sicherzustellen, daß der eine Schalter immer erst dann ein- oder ausgeschaltet wird, wenn der andere Verbraucher einen stabilen Schaltzustand erreicht hat.

In einer weiteren vorteilhaften Ausführungsform des Verfahrens wird zu Kontrollzwecken die ordnungsgemäße Bestromung der Verbraucher gemessen. Mit dieser Messung kann z.B. eine Lampenfunktionskontrolle durchgeführt werden. Um bei den erfindungsgemäß zur Begrenzung der Störsignale phasenverschobenen Schaltsignalen eine sinnvolle Messung durchführen zu können, ist der Meßzeitpunkt (Abtastzeitpunkt) oder das Meßzeit-Intervall und/oder der Meßwert-Auslesezeitpunkt oder das Meßwertauslese-Intervall auf den stabilen Einschaltzustand des zu kontrollierenden Verbrauchers einstellbar. Für diesen Zweck werden die Zeitpunkte oder Intervalle für die Messung bzw. das Auslesen der Meßwerte direkt mit den phasenverschobenen Schaltsignalen korreliert und/oder in Abhängigkeit von der Schaltzeit-Differenz (Δt) eingestellt. Für die Meßeinheit und die Ausleseeinheit kann man
auf bekannte Einheiten (z.B. AD-Wandler) zurückgreifen.

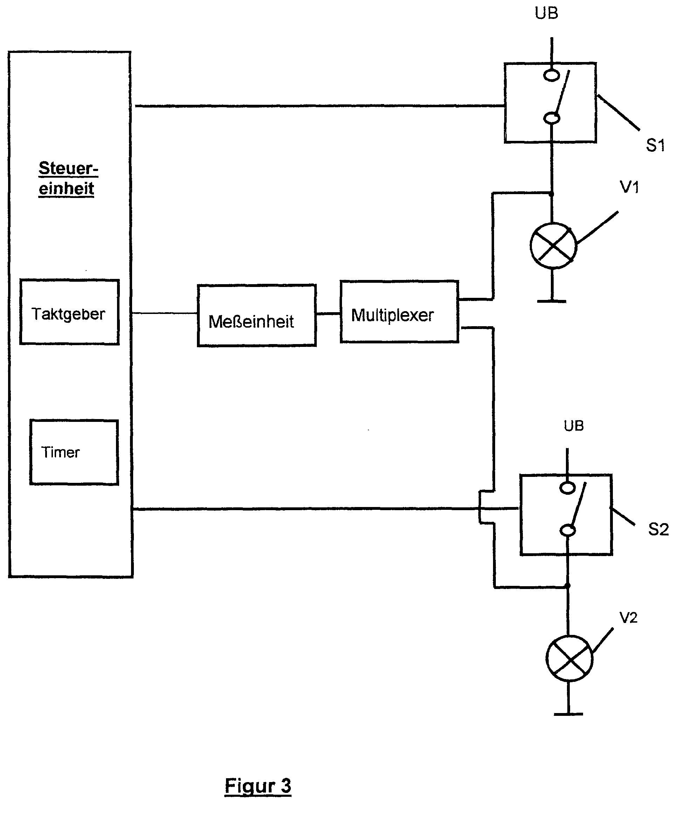

Figur 3 zeigt die Schaltungsvariante von Figur 1, die hier um eine Meßeinheit (schematisch dargestellt) für Kontrollmessungen erweitert wurde. Dabei wird die Meßeinheit durch Umschaltung eines Multiplexers wahlweise mit dem einen oder dem anderen Verbraucher (V1, V2) verbunden. Der Umschaltzeitpunkt wird dabei unter Berücksichtigung der Schaltzeit-Differenz (Δt) bestimmt. Vorzugsweise wird neben der Schaltzeit-Differenz (Δt) noch eine zusätzliche Verzögerungszeit für die Meßumschaltung mit einbezogen, damit der zu kontrollierende Verbraucher sich im einem stabilen Einschaltzustand befindet.

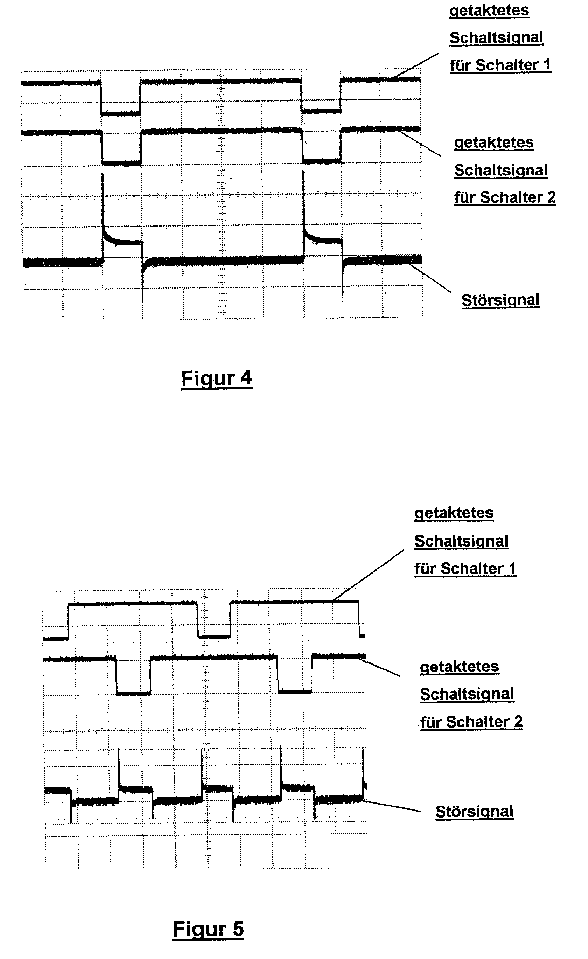

Die vorteilhafte Wirkung des erfindungsgemäßen Verfahrens wird in der Gegenüberstellung der Figuren 4 und 5 deutlich. In Figur 4 eine Oszillogrammaufzeichnung für die Ein-und Ausschaltsignale von zwei nach dem Stand der Technik getaktet betriebenen Verbrauchern sowie das korrespondierende Störsignal auf der Versorgungsleitung dargestellt. Figur 5 zeigt die Oszillogrammaufzeichnung für zwei nach dem erfindungsgemäßen Verfahren getaktet betriebene Verbraucher. Wie deutlich zu erkennen ist, ist die Amplitude des Störsignals beim Verfahren gemäß des Standes der Technik aufgrund der Überlagerung der beiden zeitgleichen Störsignale wesentlich größer als beim erfindungsgemäßen Verfahren.

Selbstverständlich ist das erfindungsgemäße Verfahren nicht auf den Betrieb von 2 Verbrauchern beschränkt. Vielmehr werden die Vorteile des Verfahrens um so größer je mehr Verbraucher betrieben werden sollen.

## Patentansprüche

1. Verfahren zum Betreiben von mindestens zwei elektrischen Verbrauchern (V1,V2), die während einer gemeinsamen Zeitdauer betrieben werden, wobei die Bestromung der Verbraucher (V1,V2) während des Betriebs getaktet erfolgt,
**dadurch gekennzeichnet, daß**
die Verbraucher (V1,V2) jeweils über einen eigenen elektrisch betätigbaren Schalter (S1,S2) während des Betriebs taktweise ein- und ausgeschaltet werden, wobei
mindestens zwei Schalter (S1,S2) jeweils zeitversetzt im Abstand einer
Schaltzeit-Differenz (Δt) eingeschaltet werden
und/oder
mindestens zwei Schalter (S1,S2) jeweils zeitversetzt im Abstand einer
Schaltzeit-Differenz (Δt) ausgeschaltet werden.

2. Verfahren nach Anspruch 1, **dadurch gekennzeichnet, daß**
von einer Steuereinheit Ein- und Ausschaltsignale erzeugt werden, mit denen die Schalter (S1,S2) beaufschlagt werden.

3. Verfahren nach Anspruch 2, **dadurch gekennzeichnet, daß**
von der Steuereinheit die Taktsignale eines Taktgebers für die Erzeugung der Einschalt- und Ausschaltsignale verwendet werden, wobei die getakteten Einschalt- und/oder die getakteten Ausschaltsignale für die Beaufschlagung von mindestens zwei Schaltern (S1,S2) zur Bewirkung der Schaltzeit-Differenz (Δt) phasenverschoben sind.

4. Verfahren nach Anspruch 3, **dadurch gekennzeichnet, daß**
von der Steuereinheit (Δt) die Schaltzeit-Differenz mittels eines Timer-Bausteins aus den Taktsignalen des Taktgebers erzeugt wird.

5. Verfahren nach Anspruch 3, **dadurch gekennzeichnet, daß**
von der Steuereinheit die Schaltzeit-Differenz (Δt) mittels eines Timer-Bausteins aus den Taktsignalen eines weiteren Taktgebers erzeugt wird, während die getakteten Schaltsignale für die Beaufschlagung der Schalter (S1,S2) aus den Taktsignalen des ersten Taktgebers erzeugt werden.

6. Verfahren nach Anspruch 2, **dadurch gekennzeichnet, daß**
von der Steuereinheit für mindestens zwei Schalter (S1,S2) jeweils ein gemeinsames Einschalt- und/oder Ausschaltsignal erzeugt wird, wobei die Beaufschlagung von mindestens einem Schalter (S2) mit dem Einschalt- und Ausschaltsignal über ein Verzögerungsglied um die Schaltzeit-Differenz (Δt) später erfolgt als die jeweilige Schaltsignal-Beaufschlagung von mindestens einem anderen Schalter (S1).

7. Verfahren nach einem der vorstehenden Ansprüche, **dadurch gekennzeichnet, daß**
die Schaltzeit-Differenz so gewählt ist, daß der Schalter von mindestens einem Verbraucher erst dann ein- oder ausgeschaltet wird, wenn mindestens ein anderer Verbraucher einen stabilen Schaltzustand erreicht hat.

8. Verfahren nach einem der vorstehenden Ansprüche, **dadurch gekennzeichnet, daß**
die Pulsweite der taktweise ein- und ausgeschalteten Verbraucher moduliert wird.

9. Verfahren nach Anspruch 8, **dadurch gekennzeichnet, daß**
die Schaltzeitdifferenz in Abhängigkeit der Pulsweite geändert wird.

10. Verfahren nach einem der vorstehenden Ansprüche, **dadurch gekennzeichnet, daß**
die Bestromung von mindestens einem der Verbraucher gemessen wird, wobei der Meßzeitpunkt oder das Meßzeitintervall und/oder der Meßwert-Auslesezeitpunkt oder das Meßwertauslese-Intervall auf den stabilen Einschaltzustand dieses Verbrauchers einstellbar sind.

11. Verfahren nach Anspruch 10, **dadurch gekennzeichnet, daß**
der Meßzeitpunkt oder das Meßzeitintervall und/oder der Meßwert-Auslesezeitpunkt oder das Meßwertauslese-Intervall in Abhängigkeit von den Schaltsignalen und/oder der Schaltzeitdifferenz für den Schalter dieses Verbrauchers eingestellt wird.

12. Verfahren nach Anspruch 11, **dadurch gekennzeichnet, daß**
die Messung von einer Meßeinheit durchgeführt wird, wobei die Meßeinheit und/oder eine Meßwert-Ausleseeinheit über einem Multiplexer mit mindestens zwei Verbrauchern verbindbar sind, wobei die Meßeinheit und/oder eine Meßwert-Ausleseeinheit durch Umschaltung des Multiplexers wahlweise mit dem einen oder dem anderen Verbraucher verbindbar ist und der Umschaltzeitpunkt unter Berücksichtigung der Schaltzeit-Differenz zwischen diesen beiden Verbrauchern bestimmt wird.
